# EUROPÄISCHE PATENTSCHRIFT

(11) **EP 2 585 340 B1**
(45) Veröffentlichungstag und Bekanntmachung des Hinweises auf die Patenterteilung: **10.02.2016**
(21) Anmeldenummer: 11733996.0
(22) Anmeldetag: 17.06.2011
(51) Int. Cl.: B60N 2/68, B60N 2/48

(54) **KOPFSTÜTZENHALTER**
HEADREST SUPPORT
APPUIE-TÊTE

(30) Priorität: 22.06.2010 DE 102010024637
(43) Veröffentlichungstag der Anmeldung: 01.05.2013
(73) Patentinhaber: Johnson Controls GmbH, 51399 Burscheid (DE)
(72) Erfinder: BAGIN, Juraj, 01841 Dubnica nad Vahom (SK); LETTENMAYER, Lars, 53819 Neunkirchen-Seelscheid (DE)
(74) Vertreter: Wolff, Felix
(86) Internationale Anmeldenummer: PCT/EP2011/003010
(87) Internationale Veröffentlichungsnummer: WO 2011/160795

(56) Entgegenhaltungen:
- DE-U1-202010 007 559
- FR-A1- 2 414 417
- US-A1- 2005 035 641
- US-A1- 2005 127 736

## Beschreibung

### Die vorliegende Erfindung betrifft ein Haltemittel für eine Kopfstütze mit einem Kopfstützkissen, das an mindestens einer Haltestange vorgesehen ist, die in dem Haltemittel gelagert ist, das mit einem Verbindungsmittel an dem Rahmen einer Fahrzeugsitzrückenlehne befestigbar ist.

Derartige Haltemittel für Kopfstützen sind hinlänglich aus dem Stand der Technik bekannt. Bei derartigen Massenartikeln besteht jedoch immer die Aufgabe, deren Montage zu vereinfachen beziehungsweise Gewicht einzusparen.

Es war deshalb die Aufgabe der vorliegenden Erfindung ein Haltemittel zur Verfügung zu stellern, das einfacher zu montieren und leichter als Haltemittel gemäß dem Stand der Technik ist.

Ein Haltemittel nach dem Oberbegriff des Anspruchs 1 ist z.B. aus dem Dokument US 2005/035641 A1 bekannt. Ein weiteres Haltemittel ist z.B. aus dem Dokument US2005/127736 A1 oder dem Dokument FR 2 414 417 A1 bekannt.

Gelöst wird die Aufgabe mit einem Haltemittel nach Anspruch 1.

Dabei wird das Verbindungsmittel aus dem Haltemittel, das rohrförmig vorgesehen ist, rausgeschnitten oder ausgeklinkt und dann in die gewünschte Form gebracht. Wichtig dabei ist, dass sie auch bei dieser Bearbeitung einstückig bleiben.

Vorzugsweise weist das Verbindungsmittel einen abgewinkelten Bereich auf, der insbesondere flächig an dem Rahmen der Rückenlehne anliegt. Der abgewinkelte Bereich kann durch Umformen des ausgeformten Abschnitts des Haltemittels geformt werden. Vorzugsweise weist der abgewinkelte Bereich eine ebene Fläche auf, die flächig beispielswiese an dem Rahmen des Fahrzeugsitzes anliegt. Dadurch kann beispielsweise die Verbindungsfläche zwischen dem Verbindungsmittel und dem Rahmen vergrößert werden und die Verbindung beispielsweise durch Schweißen, Nieten oder eine sonstige form-, kraft- und/oder stoffschlüssige Verbindung verbessert werden. Ganz besonders bevorzugt wird der abgewinkelte Bereich durch Laserschweißen mit dem Rahmen des Fahrzeugsitzes oder mit der Fahrzeugkarosserie verbunden. Der Laserstrahl wird dabei vorzugsweise auf den abgewinkelten Bereich gerichtet.

Vorzugsweise ist das Haltemittel mit einem runden Querschnitt, ausgebildet.

Vorzugsweise sind das Halte- und das Verbindungsmittel aus Metall, insbesondere Stahl, vorzugsweise Stahlblech oder extrudiertem Stahl gefertigt.

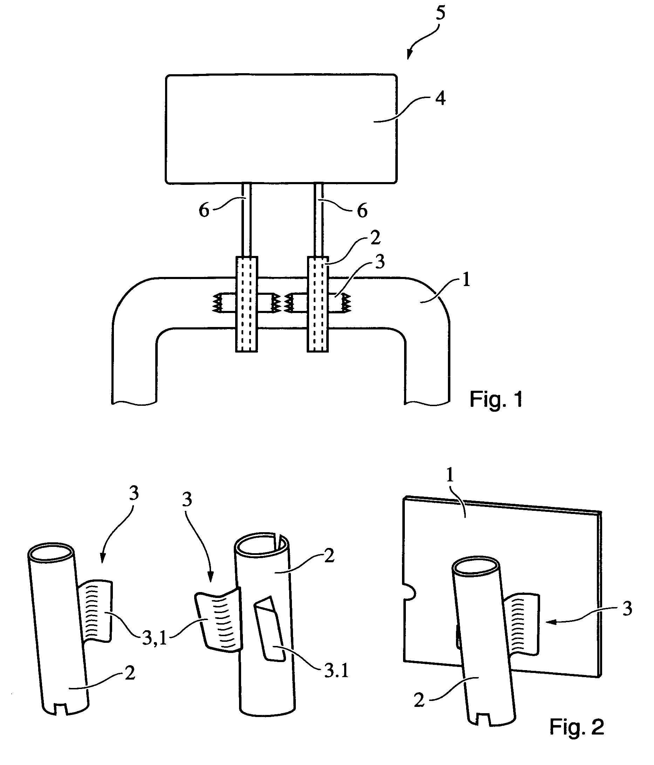

Im Folgenden wird die Erfindung anhand der Figuren 1 und 2 erläutert.
**Figur 1** zeigt ein Haltemittel für eine Kopfstütze.
**Figur 2** zeigt die Ausbildung eines einstückigen Halte- und Verbindungsmittels.

In Figur 1 ist eine Kopfstütze 5 dargestellt. Diese weist ein Kopfstützkissen auf, an dem zwei Haltestangen 6 angeordnet sind. Diese Haltestangen 6 sind in rohrförmige Haltemittel 2 eingesteckt und dort insbesondere höhenverschieblich gelagert. Der Fachmann erkennt, dass diese jedoch auch unverschieblich in dem Haltemittel 2 gelagert sein können. Erfindungsgemäß ist das Haltemittel 2 einstückig mit einem Verbindungsmittel 3 versehen, das mit dem Rahmen 1 kraft-, form- und/oder stoffschlüssig verbunden werden kann.

In dem vorliegenden Fall wird das Verbindungsmittel an dem Rahmen 1 der Rückenlehne angeschweißt. Vorzugsweise erfolgt das Schweißen durch Laserschweißen, insbesondere indem ein Laserstrahl auf den abgewinkelten Bereich 3.1 (vgl. Figur 2) des Verbindungsmittels 3 gerichtet wird.

Figur 2 zeigt ein einstückiges Halte-/Verbindungsmittel 2, 3. Bei der vorliegenden Erfindung ist das Haltemittel als Rohr vorgesehen, vorzugsweise als rundes Rohr. Aus dem Wandmaterial des Rohres wird das Material für das Verbindungsmittel 3 ausgeschnitten und dann entsprechend so gebogen, so dass es ein oder zwei abgewinkelte Bereiche 3.1, hier beispielsweise Ohren, aufweist, die dann jeweils mit dem Rahmen 1 der Rückenlehne verbunden, hier angeschweißt, insbesondere lasergeschweißt werden. Durch die abgewinkelten Bereiche 3.1 wird die Verbindungsfläche/Anlagefläche zwischen dem Verbindungsmittel 3 und dem Rahmen 1 vergrößert und eine Laserschweißverbindung zwischen dem abgewinkelten Bereich und dem Rahmen 1 ist leichter und besser zu realisieren.

### Bezugszeichenlist:

- 1: Rahmen
- 2: Haltemittel der Kopfstützstangen
- 3: Verbindungsmittel der Haltemittel mit dem Rahmen
- 3.1: abgewinkelter Bereich
- 4: Kopfstützkissen
- 5: Kopfstütze
- 6: Haltestangen des Kopfstützkissens

## Patentansprüche

1. Haltemittel für eine Kopfstütze (5) mit einem Kopfstützkissen, das an mindestens einer Haltestange (6) vorgesehen ist, die in dem Haltmittel (2) gelagert ist, das mit einem Verbindungsmittel (3) an dem Rahmen (1) eines Fahrzeugsitzes befestigbar ist, wobei das Haltemittel (2) und das Verbindungsmittel (3) einstückig vorgesehen sind, wobei das Haltemittel (2) rohrförmig vorgesehen ist, **dadurch gekennzeichnet, dass** das Verbindungsmittel (3) aus dem Wandmaterial des Rohres ausgeschnitten oder ausgeklinkt und dann in die gewünschte Form gebogen ist.

2. Haltemittel nach Anspruch 1, **dadurch gekennzeichnet, dass** das Verbindungsmittel einen abgewinkelten Bereich (3.1) aufweist.

## Claims

1. Holding means for a headrest (5) comprising a headrest cushion which is provided on at least one holding rod (6) supported in the holding means (2) which can be fastened to the frame (1) of a vehicle seat by a connecting means (3), wherein the holding means (2) and the connecting means (3) are provided in one piece, wherein the holding means (2) is provided in a tubular form, **characterized in that** the connecting means (3) is cut out from or notched out of the wall material of the tube and then bent into the desired shape.

2. Holding means according to Claim 1, **characterized in that** the connecting means has an angled region (3.1).

## Revendications

1. Moyen de fixation pour un appui-tête (5) comprenant un coussin d'appui-tête qui est prévu sur au moins une tige de retenue (6) qui est supportée dans le moyen de fixation (2) qui peut être fixé à un moyen de connexion (3) au niveau du cadre (1) d'un siège de véhicule, le moyen de fixation (2) et le moyen de connexion (3) étant réalisés d'une seule pièce, le moyen de fixation (2) étant prévu sous forme tubulaire, **caractérisé en ce que** le moyen de connexion (3) est découpé dans le matériau de paroi du tube ou est fléchi à partir de celui-ci puis est ensuite cintré à la forme souhaitée.

2. Moyen de fixation selon la revendication 1, **caractérisé en ce que** le moyen de connexion présente une région coudée (3.1).
